(19) Europäisches Patentamt
European Patent Office
Office européen des brevets

(11) **EP 2 321 618 B1**

(12) **EUROPÄISCHE PATENTSCHRIFT**

(45) Veröffentlichungstag und Bekanntmachung des Hinweises auf die Patenterteilung:
**14.06.2017 Patentblatt 2017/24**

(21) Anmeldenummer: **09743845.1**

(22) Anmeldetag: **01.09.2009**

(51) Int Cl.:
***G01B 11/275*** (2006.01)

(86) Internationale Anmeldenummer:
**PCT/DE2009/075047**

(87) Internationale Veröffentlichungsnummer:
**WO 2010/025723 (11.03.2010 Gazette 2010/10)**

(54) **VORRICHTUNG UND VERFAHREN ZUM BESTIMMEN UND EINSTELLEN DER FAHRWERKSGEOMETRIE EINES FAHRZEUGES**

DEVICE AND METHOD FOR DETERMINING AND SETTING THE CHASSIS GEOMETRY OF A VEHICLE

DISPOSITIF ET PROCÉDÉ DE DÉTERMINATION ET DE RÉGLAGE DE LA GÉOMÉTRIE D'UN CHÂSSIS DE VÉHICULE À MOTEUR

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **02.09.2008 DE 102008045307**

(43) Veröffentlichungstag der Anmeldung:
**18.05.2011 Patentblatt 2011/20**

(73) Patentinhaber: **Dürr Assembly Products GmbH 66346 Püttlingen (DE)**

(72) Erfinder:
• **TENTRUP, Thomas 66663 Mechern (DE)**

• **DEUTSCH, André 67260 Herbitzheim (FR)**
• **KOLB, Thomas 66440 Blieskastel (DE)**

(74) Vertreter: **Vièl, Christof Patentanwaltskanzlei Vièl & Wieske PartGmbB Feldmannstrasse 110 66119 Saarbrücken (DE)**

(56) Entgegenhaltungen:
WO-A-2008/028832     DE-U1- 29 906 813
US-A1- 2002 040 533     US-B1- 6 209 209
US-B1- 6 219 134

**Beschreibung**

Die Erfindung betrifft ein Verfahren und eine Vorrichtung zum Bestimmen und Einstellen der Fahrwerksgeometrie eines Fahrzeuges.

Aus der DE 10 2007 003 086 A1 ist eine Vorrichtung zum Messen der Fahrwerksgeometrie von Fahrzeugen, insbesondere von Bussen und Lastkraftwagen, bekannt, wobei die Vorrichtung in Richtung der Fahrzeuglängsachse translatorisch verstellbare Radaufnahmemittel aufweist, wobei die Vorder- bzw. Hinterräder des Kraftfahrzeuges auf die Radaufnahmemittel aufsetzbar sind und die Radaufnahmemittel in einer horizontalen Ebene angeordnet sind und wobei Meßsysteme angeordnet sind. Bei einer solchen Vorrichtung sind mindestens vier in Richtung der Fahrzeuglängsachsen verstellbare Radaufnahmemittel vorgesehen, wobei auf jedem Radaufnahmemittel mindestens ein Drehteller zur Radaufnahme angeordnet ist.

Die DE 10 2006 036 671 A1 beschreibt ein Verfahren zur Bestimmung der Achsgeometrie eines Fahrzeuges, wobei Licht einer vorgegebenen Struktur auf ein Fahrzeugrad projiziert wird, wobei das diffus reflektierte Licht ausgewertet wird, um daraus die Orientierung der Ebene des Fahrzeugrades zu ermitteln, wobei mehrere Linien eines mittels einer oder mehreren Laserlichtquellen erzeugten Laserlichtes auf das Rad projiziert werden, wobei zeitlich nacheinander einzelne oder mehrere dieser Linien ausgeblendet bzw. eingeblendet werden, wobei das reflektierte Licht mittels einer oder mittels mehrerer Kameras erfaßt wird. Über die Reifenseitenkonturen können die Reifenwulstmaxima bestimmt werden, die bei einem idealen Reifen auf einem Kreis liegen und eine mögliche Ebene eines Rades definieren. Im Fall eines Fahrzeuges, das bei der Vermessung auf seinen Rädern steht, ist der Reifen in der Nähe des Aufstandspunktes deformiert, so daß zur Berechnung der Ebene nur Konturen verwendet werden, die nicht in der Nähe des Radaufstandspunktes liegen. Aufgrund der Reifenbeschriftung und des Reifenschlages ermittelt man die Orientierung der Ebene des Fahrzeugrades, die senkrecht zur Drehachse des Rades orientiert ist, über eine sogenannte Umschlagsmessung. Bei einer Umschlagsmessung werden die während einer Radumdrehung erfaßten Orientierungen der Ebenen des Fahrzeugrades gemittelt. Das entsprechende Fahrwerkgeometriemeßsystem wird von der Dürr Assembly Products GmbH unter der Bezeichnung "x-3Dprofile-Fahrwerkgeometriemeßsystem" vertrieben. Die hierbei verwendete Kompaktsonde "Visicon dPP" arbeitet nach dem Meßprinzip der Stereophotogrammetrie. Zur Beleuchtung des zu vermessenden Reifens werden Laserzeilen (durch Zylinderlinsen zur Linie aufgeweitet) in hoher Lichtintensität verwendet, die eine flächige Punktmatrix bilden und einzeln schaltbar sind.

Aus der WO 2008/028832 A1 ist eine Vorrichtung zum Bestimmen von Abständen zur Fahrwerksvermessung eines Kraftfahrzeugs, insbesondere eines Höhenstands oder eines Felgendurchmessers, bekannt, wobei mindestens zwei Meßkameras vorgesehen sind, mit denen jeweils ein Bild der Radfelge und ein Bild eines Bereiches benachbart zur Radfelge aufgenommen wird und wenigstens ein erster und ein zweiter Raumpunkt in den beiden aufgenommenen Bildern bestimmt sowie der Abstand zwischen den beiden Raumpunkten bestimmt wird.

Die US 2002/0040533 A1 beschreibt eine Vorrichtung und ein Verfahren zum Justieren der Achsgeometrie eines Fahrzeuges, wobei mindestens ein Rad des Fahrzeuges im Leerzustand in Rotation versetzt wird. Vorzugsweise wird eine zusätzliche Messung des Lenkradwinkels vorgenommen und bei der Auswertung berücksichtigt.

Eine Lenkradwaage zur symmetrischen Ausrichtung eines Lenkrades bezüglich der Fahrtrichtung eines Fahrzeuges bei auf Geradeausfahrt eingestelltem Fahrwerk mit Mitteln zur lösbaren Befestigung der Lenkradwaage am Lenkrad in seiner jeweiligen Ist-Symmetrielage, mit einem Inklinometer zur Erfassung der Neigung der Ist-Symmetrielage gegenüber der Soll-Symmetrielage, mit einer elektronischen Vorrichtung zur Umwandlung der analogen Meßwerte des Inklinometers in digitale Werte und mit einem Sender zur Übermittlung der digitalen Werte an einen Steuerrechner ist aus der DE 299 06 813 U1 bekannt.

Die US 6,209,209 B1 beschreibt das Eliminieren von Fehlern in der Radfluchtung durch eine erste Meßreihe, bei der das Fahrzeug in einer ersten Position angeordnet ist und die seitlichen Kräfte im Wesentlichen aufgehoben sind und wobei das Fahrzeug auf seinen Rädern steht und durch eine zweite Meßreihe in einer zweiten Meßreihe, bei der das Fahrzeug in einer zweiten Position angeordnet ist und die seitlichen Kräfte im Wesentlichen aufgehoben sind und wobei das Fahrzeug auf seinen Rädern steht.

Die US 6,219,134 B1 beschreibt eine Vorrichtung zur Bestimmung der Radfluchtung mit mehreren Sensorelementen, die verschiedene Winkel, wie den Lenkradwinkel und die Spur bestimmen.

Aufgabe der vorliegenden Erfindung ist es, ein Verfahren zum Bestimmen und Einstellen der Fahrwerkgeometrie eines Fahrzeugs, und eine Vorrichtung zum Bestimmen der Fahrwerkgeometrie eines Fahrzeugs, ohne Schwimmplatten mit angetriebenen Rollenpaaren zur gleichförmigen Drehung der Räder zu schaffen, ohne auf die in Winkelminuten genaue und reproduzierbare Spur- und Sturzwinkelmessung zu verzichten. Diese Aufgabe wird durch ein Verfahren mit den Merkmalen des unabhängigen Verfahrensanspruchs sowie durch eine Vorrichtung mit den Merkmalen des unabhängigen Vorrichtungsanspruchs gelöst. Vorteilhafte Weiterbildungen ergeben sich aus den abhängigen Ansprüchen.

Die Aufgabe wird erfindungsgemäß durch ein Verfahren gelöst, wobei die Verfahrensschritte umfassen:

1. Einsetzen einer Lenkradwaage zum Erfassen der Lenkradstellung und Fahren des Fahrzeuges auf eine Position A, wobei in Position A die Räder des Fahrzeuges auf Mitteln zum seitlichen Entspannen des Fahrzeuges angeordnet werden,

2. Aufnahme der Spur- und Sturzwinkel sowie der x-, y- und z-Positionen des Radmittelpunktes der Vorderräder in Position A mittels nach dem Prinzip der Stereophotogrammetrie arbeitenden Meßsonden,

3. Aufnahme der Spur- und Sturzwinkel sowie der x-, y- und z-Positionen des Radmittelpunktes der Hinterräder in Position A mittels nach dem Prinzip der Stereophotogrammetrie arbeitenden Meßsonden,

4. Berechnung aller Spur- und Sturzwinkel des Fahrzeuges in der Position A in Bezug auf die Symmetrieachse des Fahrzeuges und in Bezug auf die Lenkradstellung, wobei die Messwerte der Lenkradwaage mit dem Einschlagwinkel der Vorderachse verrechnet werden,

5. Verfahren des Fahrzeuges auf eine Position B, wobei in Position B die nicht einzustellenden Räder des Fahrzeuges auf Mitteln zum seitlichen Entspannen des Fahrzeuges und die einzustellenden Räder des Fahrzeugs auf Drehtellern angeordnet sind,

6. Aufnahme der Spur- und Sturzwinkel sowie der x-, y- und z-Positionen des Radmittelpunktes der Hinterräder in Position B mittels nach dem Prinzip der Stereophotogrammetrie arbeitenden Meßsonden,

7. Aufnahme der Spur- und Sturzwinkel sowie der x-, y- und z-Positionen des Radmittelpunktes der Vorderräder in Position B mittels nach dem Prinzip der Stereophotogrammetrie arbeitenden Meßsonden,

8. Berechnung aller Spur- und Sturzwinkel des Fahrzeuges in der Position B in Bezug auf die Symmetrieachse des Fahrzeuges und in Bezug auf die Lenkradstellung, wobei die Messwerte der Lenkradwaage mit dem Einschlagwinkel der Vorderachse verrechnet werden,

9. Berechnung der Spur- und Sturzwinkel aller Radachsen mit kompensierten Radschlägen,

10. Einstellung der Einzelspurwinkel der Vorderachse, deren Räder auf den Drehtellern stehen unter ständiger Messung durch die nach dem Prinzip der Photogrammetrie arbeitenden Meßsonden auf Position B der Vorderachse.

Hierbei ist es sowohl möglich, daß die Meßsonden von der Vorderachse zu der Hinterachse verfahren werden als auch, daß sowohl im Bereich der Vorderachse als auch im Bereich der Hinterachse Meßsonden angeordnet sind. Zwischen den Positionen A und B einer jeden Achse werden die Meßsonden verfahren, es sei denn, der Abstand zwischen den Positionen A und B sei sehr gering. In letzterem Falle können die Meßsonden auch zwischen den beiden Positionen A und B angeordnet werden.

Eine Vorrichtung zum Durchführen der Schritte 1-9 des obigen Verfahrens ist ebenfalls erfindungsgemäß vorgesehen, wobei die Vorrichtung zwei Fahrbahnen, auf denen das Fahrzeug mit Eigenkraft oder automatisiert von einer Position A zu einer Position B verfahrbar ist, wobei die zwei Fahrbahnen je zwei Mittel zum seitlichen Entspannen der Räder des Fahrzeuges aufweisen, welche zumindest im Bereich der Vorderachse des Fahrzeuges an der Position B Drehteller aufweisen, beidseitig der Fahrbahnen je mindestens eine nach dem Prinzip der Stereophotogrammetrie arbeitende Meßsonde, wobei die Meßsonden von der Vorderachse zu der Hinterachse verfahrbar sind, im Bereich der Vorderachse als auch im Bereich der Hinterachse angeordnet sind oder zwischen den beiden Positionen A und B angeordnet werden und wobei die Meßsonden im Gebrauch in Position A für die Vorderräder und die Hinterräder die Spur- und Sturzwinkel sowie die x-, y- und z-Positionen des Radmittelpunktes der Räder aufnehmen und in der Position B die Spur- und Sturzwinkel sowie die x-, y- und z-Positionen des Radmittelpunktes der Hinterräder aufnehmen, Mittel zum Erfassen des Verfahrweges der Meßsonden und eine Lenkradwaage zum Erfassen der Lenkradstellung, deren Meßwerte im Gebrauch mit dem Einschlagwinkel der Vorderachse des Fahrzeugs verrechnet werden, umfasst.

Bei dieser Ausgestaltung der Vorrichtung ist es möglich, eine Fahrwerkgeometrieprüf- und Einstellvorrichtung ohne Schwimmplatten mit angetriebenen Rollenpaaren zur gleichförmigen Drehung der Räder zu schaffen, ohne auf die in Winkelminuten genaue und reproduzierbare Spur- und Sturzwinkelmessung zu verzichten. Das Fahrzeug fährt hier mit Eigenkraft (wobei es sowohl möglich ist, daß ein Werker das Fahrzeug verfährt als auch ein automatisiertes Verfahren möglich ist) und bedarf somit keiner Fördereinrichtung. Auf diese Weise wird eine deutliche Kostenreduzierung und zudem eine Reduzierung der Taktzeit für die zu produzierenden Fahrzeuge erreicht. Vorteilhafterweise ist vorgesehen, daß die Mittel zum seitlichen Entspannen des Fahrzeuges Verschiebeplatten sind, die in $\gamma$-Richtung verschiebbar sind.

Alternativ ist es möglich, daß als Mittel zum seitlichen Entspannen des Fahrzeuges Rollenbetten vorgesehen sind. Vorteilhafterweise ist vorgesehen, daß die Meßsonden jeweils über die gesamte Länge der Fahrbahnen verfahrbar sind.

Eine Weiterbildung der Erfindung besteht darin, daß vier nach dem Prinzip der Stereophotogrammetrie arbeitende Meßsonden vorgesehen sind, die jeweils einem Rad des Fahrzeuges zugeordnet und vorzugsweise zwischen den Positionen A und B verfahrbar sind. Eine andere Weiterbildung der Erfindung besteht darin, daß auch im Bereich der Hinterachse des Fahrzeuges an der Position B Drehteller vorgesehen sind. Eine andere Weiterbildung der Erfindung besteht darin, daß der Abstand zwischen den Positionen A und B zwischen 0,3 und 1 m beträgt.

Nachfolgend wird ein Ausführungsbeispiel der Erfindung anhand von Zeichnungen näher erläutert.

Es zeigen

Fig. 1a und Fig. 1b     zwei Darstellungen erfindungsgemäßer Vorrichtungen,

Fig. 2     ein Fahrzeug in den Positionen A und B,

Fig. 3     eine Darstellung von Spur- und Sturzwinkelkurven, die mit einer erfindungsgemäßen Vorrichtung ermittelt wurden.

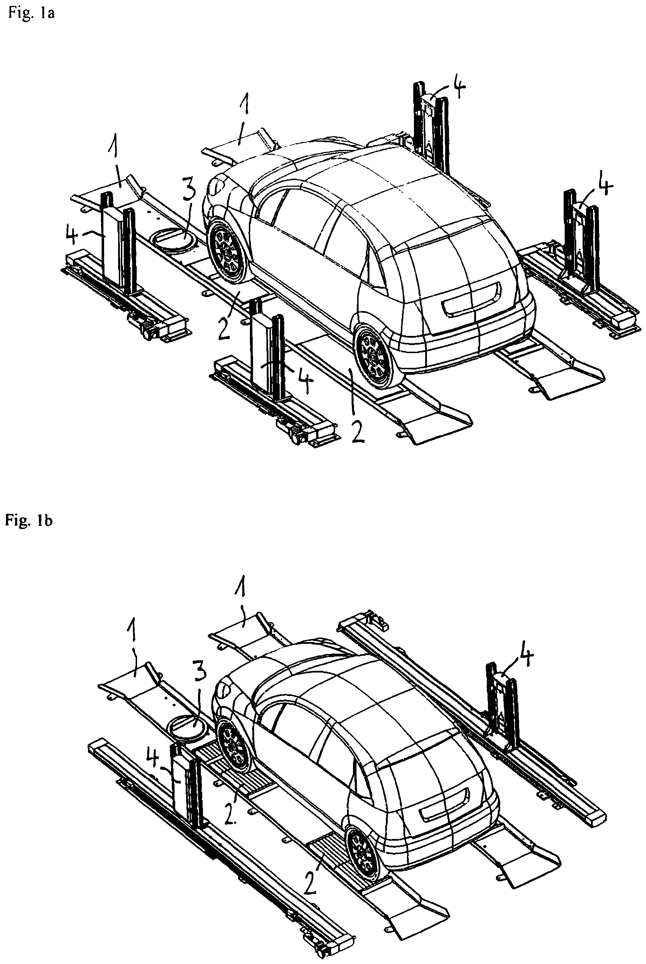

Wie in Fig. 1a und 1b dargestellt, weist die erfindungsgemäße Vorrichtung zwei Fahrbahnen 1 mit je zwei Mitteln 2 zum Entspannen (spannungsfrei machen) des Fahrzeuges auf, welche hier in Fig. 1a als Verschiebeplatten 2 und in Fig. 1b als Rollenbetten 2 zur Aufnahme der Räder des Fahrzeuges ausgebildet sind. Die Verschiebeplatten 2 sind in y-Richtung verschiebbar. Zumindest im Bereich der Vorderachse des Fahrzeuges sind an der Position B Drehteller 3 vorgesehen; wenn auch die Hinterachse eingestellt werden soll, müssen auch im Bereich der Hinterachse an der Position B Drehteller vorgesehen sein. Beidseitig der Fahrbahnen 1 ist je eine nach dem Prinzip der Stereophotogrammetrie arbeitende Meßsonde 4 (Kompaktsonde, wie sie im x-3Dprofile-Fahrwerkgeometriemeßsystem der Dürr Assembly Products GmbH verwendet wird) angeordnet, welche jeweils über die gesamte Länge der Fahrbahnen 1 (d.h. in x-Richtung) verfahrbar ist. Weiterhin sind Mittel zum Erfassen des Verfahrweges der Meßsonden 4 vorgesehen. Schließlich ist auch eine (vorzugsweise kabellose) Lenkradwaage (nicht dargestellt) zur Erfassung der Lenkradstellung vorgesehen, deren Meßwerte mit dem Einschlagwinkel der Vorderachse verrechnet werden.

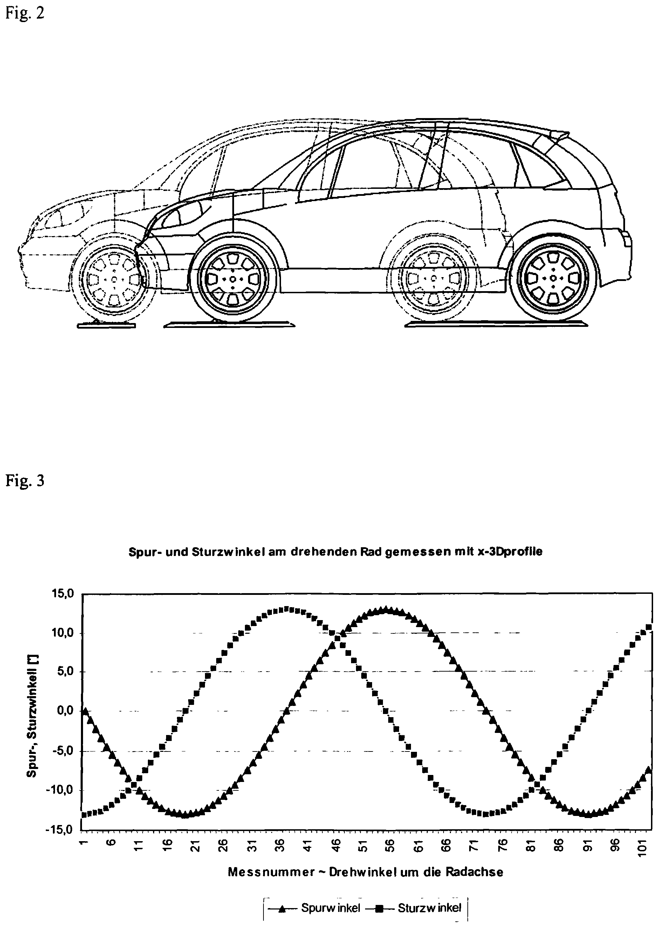

Fig. 2 zeigt ein Fahrzeuges in den Positionen A (durchgezogene Linie) und B (gestrichelte Linie).

Die Vermessung der Fahrwerkgeometrie eines Fahrzeuges findet an den Reifenaußenseiten statt. An den Reifenaußenseite befindet sich Beschriftung und der Reifen an sich hat einen Schlag bei der Drehung $\varphi$ um die Radachse. Somit ist der Spurwinkel $\alpha$ und der Sturzwinkel $\beta$ eine Funktion der Drehung $\varphi$ um die Radachse, d.h. $\alpha(\varphi)$, $\beta(\varphi)$. Der tatsächliche Spur- bzw. Sturzwinkel des Rades ist der Spur- bzw. Sturzwinkel $\alpha$ bzw. $\beta$ der Radachse und errechnet sich aus der Mittelwertbildung der Funktionen $\alpha(\varphi)$, $\beta(\varphi)$ über eine Radumdrehung:

$$\alpha = (1/2\pi) \int_0^{2\pi} \alpha(\varphi) \, d\varphi \qquad \beta = (1/2\pi) \int_0^{2\pi} \beta(\varphi) \, d\varphi$$

Um eine in Winkelminuten genaue und reproduzierbare Spur- und Sturzwinkelmessung zu erhalten, müssen die Reifen auf einem Fahrwerkstand während der Messung gleichförmig mit Hilfe von Schwimmplatten mit angetriebenen Rollenpaaren gedreht werden.

Um einen Fahrwerkgeometrieprüf- und Einstellstand (kurz: Fahrwerkstand) ohne Schwimmplatten mit angetrieben Rollenpaaren zur gleichförmigen Drehung der Räder zu schaffen, ohne auf eine in Winkelminuten genaue und reproduzierbare Spur- und Sturzwinkelmessung zu verzichten, wird die folgende Eigenschaft der x-3Dprofile Fahrwerkgeometriemeßsonde genutzt: Durch die dreidimensionale Gesamtaufnahme der Reifenseitenfront in Verbindung mit geeigneten Algorithmen zur Spur- und Sturzwinkelmessung wird die Reifenbeschriftung faktisch weggemittelt und man erhält mit der x-3Dprofile Fahrzeuggeometriemeßsonde in diesem Fall für die Funktionen $\alpha(\varphi)$ und $\beta(\varphi)$:

$$\alpha(\varphi) = \alpha + s*\sin(\varphi) \qquad (1a)$$

und

$$\beta(\varphi) = \beta + s*\sin(\varphi + \pi/2) \qquad (1b)$$

wobei $\alpha(\varphi)$, $\beta(\varphi)$ die gemessenen Spur- und Sturzwinkel der x-3Dprofile Fahrwerkgeometriemeßsonde beim unbekannten Drehwinkel $\varphi$, die tatsächlichen Spur- und Sturzwinkel $\alpha$, $\beta$ der Radachse und s der "Schlag" des Rades sind.

Fig. 3 zeigt eine Darstellung von Spur- und Sturzwinkelkurven, die mit einer erfindungsgemäßen Vorrichtung ermittelt wurden.

Mißt man nun den Spur- und Sturzwinkel $\alpha_A$, $\beta_A$ mit der x-3Dprofile Fahrzeuggeometriemeßsonde an einer Position A des Fahrzeuges in Fahrrichtung, wobei das Rad einen Drehwinkel $\varphi_A$ annimmt, dann erhält man gemäß (1a, 1b):

$$\alpha_A = \alpha(\varphi_A) = \alpha + s*\sin(\varphi_A) \quad (2a)$$

und

$$\beta_A = \beta(\varphi_A) = \beta + s*\sin(\varphi_A + \pi/2) \quad (2b)$$

Fahren nun das Fahrzeug und die x-3Dprofile Fahrzeuggeometriemeßsonde in Fahrtrichtung (x-Richtung) in die Position B, wobei der Abstand in Fahrtrichtung |A-B| ungefähr $U_{Rad}/2 = \pi*R_{Rad}$ ($U_{Rad}$ = Radumfang, $R_{Rad}$ = Radradius) entspricht, nimmt das Rad den Drehwinkel $\varphi_B$ an. Man erhält man gemäß (1a, 1b):

$$\alpha_B = \alpha(\varphi_B) = \alpha + s*\sin(\varphi_B) \quad (3a)$$

und

$$\beta_B = \beta(\varphi_B) = \beta + s*\sin(\varphi_B + \pi/2) \quad (3b)$$

Für den Drehwinkel $\varphi_B$ in der Position B gilt:

$$\varphi_B = \varphi_A + \delta \quad \text{mit} \quad \delta = |A\text{-}B|/R_{Rad} \quad (4)$$

Die x-3Dprofile Fahrzeuggeometriemeßsonde mißt neben Spur- und Sturzwinkel auch die x-, y- und z-Koordinate des Radmittelpunktes und kann auch den Radius $R_{Rad}$ des Rades erfassen. Weiterhin wird der Verfahrweg der Sonde in x-Richtung erfaßt. Damit ist die Strecke |A-B| bekannt und $\delta$ läßt sich gemäß (4) berechnen. Setzt man (4) in (3a) ein, so erhält man:

$$\alpha_B = \alpha + s*\sin(\varphi_A + \delta) \quad (5a)$$

und

$$\beta_B = \beta + s*\sin(\varphi_A + \delta + \pi/2) \quad (5b)$$

Die vier Gleichungen (2a, 2b) und (5a, 5b) bilden ein Gleichungssystem zur Berechnung der vier Unbekannten $\alpha$, $\beta$, s und $\varphi_A$ womit das Problem der Berechnung der Spur- und Sturzwinkel $\alpha$, $\beta$ der Radachse unter Kompensation des Radschlages gelöst ist.
Besonders einfach ist die Berechnung des Spur- und Sturzwinkel $\alpha$, $\beta$ der Radachse in zwei Fällen:

Fall 1: |A-B| = $U_{Rad}/4 = (\pi/2)*R_{Rad}$, d.h. die Strecke |A-B| entspricht ungefähr bei gebräuchlichen Radradien 0,5 Meter und für $\delta$ gilt:

$$\delta = \pi/2 \quad (6)$$

Setzt man (6) in (5a,b) ein so erhält man:

$$\alpha_B = \alpha + s*\sin(\varphi_A + \pi/2) \quad (7a)$$

und

$$\beta_B = \beta + s*\sin(\varphi_A + \pi)$$
$$= \beta - s*\sin(\varphi_A) \quad (7b)$$

Man erhält aus (2b) und (7a):

$$\alpha_B - \alpha = \beta_A - \beta \quad (8a)$$

und aus (2a) und (7b):

$$\alpha_A - \alpha = \beta - \beta_B \quad (8b)$$

Somit erhält man

- den Spurwinkel $\alpha$ der Radachse aus (8a)+(8b):

$$\alpha = [\alpha_A + \alpha_B - (\beta_A - \beta_B)]/2$$

- den Sturzwinkel $\beta$ der Radachse aus (8a)-(8b)]:

$$\beta = [\beta_A + \beta_B + (\alpha_A - \alpha_B)]/2$$

Ist die benötigte Strecke |A-B| wesentlich kleiner als 1 Meter, so kann ohne Verfahren der x-3D Fahrwerkgeometriemeßsonde das Fahrzeug in der Position A und B vermessen werden. Die x-3Dprofile Fahrwerkgeometriemeßsonde steht dabei zwischen der Position A und B.

Fall 2: $|A-B| = U_{Rad}/2 = \pi/*R_{Rad}$, d.h. die Strecke |A-B| entspricht ungefähr bei gebräuchlichen Radradien 1 Meter und für $\delta$ gilt:

$$\delta = \pi \quad (9)$$

Setzt man (9) in (5a,b) ein so erhält man:

$$\alpha_B = \alpha + s*\sin(\varphi_A + \pi)$$
$$= \alpha - s*\sin(\varphi_A) \quad (10a)$$

und und

$$\beta_B = \beta + s*\sin(\varphi_A + \pi + \pi/2)$$
$$= \beta - s*\sin(\varphi_A + \pi/2) \quad (10b)$$

Somit erhält man

- den Spurwinkel $\alpha$ der Radachse aus (2a)+(10a):

$$\alpha = (\alpha_A + \alpha_B)/2$$

- den Sturzwinkel $\beta$ der Radachse aus (2b)+(10b):

$$\beta = (\beta_A + \beta_B)/2$$

Der Ablauf einer Messung der Fahrzeuggeometrie bei der in Fig. 1 gezeigten Vorrichtung ist wie folgt (die x-3Dprofile Fahrzeuggeometriemeßsonden werden nachfolgend als Meßsonden bezeichnet):

- Meßsonden stehen auf Position A der Vorderachse,
- Werker fährt nach Identifikation des Fahrzeuges mit eingesetzter Lenkradwaage gerade auf die Position A,
- Meßsonden nehmen die Spur-, Sturzwinkel und x-, y-, z-Positionen des Radmittelpunktes der Vorderräder in Position A auf,
- Meßsonden fahren auf Position A der Hinterachse,
- Meßsonden nehmen die Spur-, Sturzwinkel und x-, y-, z-Positionen des Radmittelpunktes der Hinterräder in Position A auf,
- Berechnung aller Spur- und Sturzwinkel in der Position A in Bezug zur Symmetrieachse des Fahrzeuges und in Bezug auf die Lenkradstellung,
- Werker fährt das Fahrzeug geradeaus auf Position B,
- Meßsonden fahren auf die Position B der Hinterachse,
- Meßsonden nehmen die Spur-, Sturzwinkel und x-, y-, z-Positionen des Radmittelpunktes der Hinterräder in Position B auf,
- Meßsonden fahren auf die Position B der Vorderachse,
- Meßsonden nehmen die Spur-, Sturzwinkel und x-, y- ,z-Positionen des Radmittelpunktes der Vorderräder in Position B auf,
- Berechnung aller Spur- und Sturzwinkel in der Position B in Bezug zur Symmetrieachse des Fahrzeuges und in Bezug auf die Lenkradstellung,
- Berechnung der Spur- und Sturzwinkel aller Radachsen mit kompensierten Radschlägen,
- Einstellung der Einzelspurwinkel der Vorderachse, deren Räder auf dem Drehteller stehen unter ständiger Messung der Meßsonde auf Position B der Vorderachse,
- Werker in der Grube quittiert "Einstellung Ende",
- Lenkradwaage wird aus dem Fahrzeug genommen und Fahrzeug fährt aus,
- Meßsonden fahren auf Position A der Vorderachse.

Statt durch Werker kann das Fahrzeug selbstverständlich auch automatisiert in die Vorrichtung, von Position A zu Position B bzw. aus der Vorrichtung gefahren werden.


**Patentansprüche**

1.  Verfahren zum Bestimmen und Einstellen der Fahrwerksgeometrie eines Fahrzeuges, umfassend folgende Verfahrensschritte:

   1. Einsetzen einer Lenkradwaage zum Erfassen der Lenkradstellung und Fahren des Fahrzeuges auf eine Position A, wobei in Position A die Räder des Fahrzeuges auf Mitteln zum seitlichen Entspannen des Fahrzeuges angeordnet sind,
   2. Aufnahme der Spur- und Sturzwinkel sowie der x-, y- und z-Positionen des Radmittelpunktes der Vorderräder in Position A mittels nach dem Prinzip der Stereophotogrammetrie arbeitenden Meßsonden (4),
   3. Aufnahme der Spur- und Sturzwinkel sowie der x-, y- und z-Positionen des Radmittelpunktes der Hinterräder in Position A mittels nach dem Prinzip der Stereophotogrammetrie arbeitenden Meßsonden (4),
   4. Berechnung aller Spur- und Sturzwinkel des Fahrzeuges in der Position A in Bezug auf die Symmetrieachse des Fahrzeuges und in Bezug auf die Lenkradstellung, wobei die Messwerte der Lenkradwaage mit dem Einschlagwinkel der Vorderachse verrechnet werden,

5. Verfahren des Fahrzeuges auf eine Position B, wobei in Position B die nicht einzustellenden Räder des Fahrzeuges auf Mitteln zum seitlichen Entspannen des Fahrzeuges und die einzustellenden Räder des Fahrzeuges auf Drehtellern (3) angeordnet sind,

6. Aufnahme der Spur- und Sturzwinkel sowie der x-, y- und z-Positionen des Radmittelpunktes der Hinterräder in Position B mittels nach dem Prinzip der Stereophotogrammetrie arbeitenden Meßsonden (4),

7. Aufnahme der Spur- und Sturzwinkel sowie der x-, y- und z-Positionen des Radmittelpunktes der Vorderräder in Position B mittels nach dem Prinzip der Stereophotogrammetrie arbeitenden Meßsonden (4),

8. Berechnung aller Spur- und Sturzwinkel des Fahrzeuges in der Position B in Bezug auf die Symmetrieachse des Fahrzeuges und in Bezug auf die Lenkradstellung, wobei die Messwerte der Lenkradwaage mit dem Einschlagwinkel der Vorderachse verrechnet werden,

9. Berechnung der Spur- und Sturzwinkel aller Radachsen mit kompensierten Radschlägen,

10. Einstellung der Einzelspurwinkel der Vorderachse, deren Räder auf den Drehtellern (3) stehen unter ständiger Messung durch die nach dem Prinzip der Photogrammetrie arbeitenden Meßsonden (4) auf Position B der Vorderachse.

2. Vorrichtung zum Durchführen der Schritte 1-9 des Verfahrens gemäß Anspruch 1, **umfassend**,

- zwei Fahrbahnen (1), auf denen das Fahrzeug mit Eigenkraft oder automatisiert von einer Position A zu einer Position B verfahrbar ist, wobei die zwei Fahrbahnen (1) je zwei Mittel (2) zum seitlichen Entspannen der Räder des Fahrzeuges aufweisen, welche zumindest im Bereich der Vorderachse des Fahrzeuges an der Position B Drehteller (3) aufweisen,

- beidseitig der Fahrbahnen je mindestens eine nach dem Prinzip der Stereophotogrammetrie arbeitende Meßsonde (4), wobei die Meßsonden von der Vorderachse zu der Hinterachse verfahrbar sind, im Bereich der Vorderachse als auch im Bereich der Hinterachse angeordnet sind oder zwischen den beiden Positionen A und B angeordnet werden, und wobei die Meßsonden im Gebrauch in Position A für die Vorderräder und die Hinterräder die Spur- und Sturzwinkel sowie die x-, y- und z-Positionen des Radmittelpunktes der Räder aufnehmen und in der Position B die Spur- und Sturzwinkel sowie die x-, y- und z-Positionen des Radmittelpunktes der Vorderräder und der Hinterräder aufnehmen,

- Mittel zum Erfassen des Verfahrweges der Meßsonden (4) und

- eine Lenkradwaage zum Erfassen der Lenkradstellung, deren Meßwerte im Gebrauch mit dem Einschlagwinkel der Vorderachse des Fahrzeugs verrechnet werden.

3. Vorrichtung gemäß Anspruch 2, wobei die Mittel (2) zum seitlichen Entspannen des Fahrzeuges Verschiebeplatten (2) sind, die in y-Richtung verschiebbar sind.

4. Vorrichtung gemäß Anspruch 2, wobei als Mittel (2) zum seitlichen Entspannen des Fahrzeuges Rollenbetten vorgesehen sind.

5. Vorrichtung gemäß Anspruch 2, wobei vier nach dem Prinzip der Stereophotogrammetrie arbeitende Meßsonden (4) vorgesehen sind, die jeweils einem Rad des Fahrzeuges zugeordnet und vorzugsweise zwischen den Positionen A und B verfahrbar sind.

6. Vorrichtung gemäß Anspruch 2, wobei auch im Bereich der Hinterachse des Fahrzeuges an der Position B Drehteller (3) vorgesehen sind.

7. Vorrichtung gemäß Anspruch 2, wobei der Abstand zwischen den Positionen A und B zwischen 0,3 und 1 m beträgt.

## Claims

1. Method for determining and adjusting the chassis geometry of a vehicle, comprising the following steps:

1. Utilization of a steering-wheel balance for detecting the position of the steering wheel, and driving the vehicle to a position A, where, at said position A, the vehicle wheels are disposed on means permitting lateral relaxation of the vehicle,

2. Recording of the toe and camber angles as well as the x, y and z positions of the front wheel centers at position A by means of measuring sensors (4) operating according to the principle of stereophotogrammetry,

3. Recording of the toe and camber angles as well as the x, y and z positions of the rear wheel centers at position A by means of measuring sensors (4) operating according to the principle of stereophotogrammetry,

4. Calculation of all the vehicle's toe and camber angles at position A relative to the vehicle's axis of symmetry and to the steering-wheel position, the readings obtained with the steering-wheel balance being processed mathematically with the steering angle of the front axle,

5. Movement of the vehicle to a position B, at which the vehicle wheels not to be aligned rest on means permitting lateral relaxation of the vehicle and the vehicle wheels to be aligned are disposed on rotary discs (3),

6. Recording of the toe and camber angles as well as the x, y and z positions of the rear wheel centers at position B by means of measuring sensors (4) operating according to the principle of stereophotogrammetry,

7. Recording of the toe and camber angles as well as the x, y and z positions of the front wheel centers at position B by means of measuring sensors (4) operating according to the principle of stereophotogrammetry,

8. Calculation of all the vehicle's toe and camber angles at position B relative to the vehicle's axis of symmetry and to the steering-wheel position, the readings obtained with the steering-wheel balance being processed mathematically with the steering angle of the front axle,

9. Calculation of the toe and camber angles of all the wheel axles while compensating for lateral runout,

10. Adjustment of the individual front toe angles while the front wheels rest on the rotary discs (3), the angles being measured continuously at the front axle's position B by the photogrammetrically operating measuring sensors (4).

2. Device for carrying out steps 1-9 of the method according to claim 1, comprising

   - two tracks (1) on which the vehicle can be moved under its own power or by means of an automated system from a position A to a position B, each track (1) having two means (2) that permit lateral relaxation of the vehicle wheels and having rotary discs (3) located at least in the area of the front axle when the vehicle is at position B,
   - at least one measuring sensor (4), which operates according to the principle of stereophotogrammetry, on the outside of each of the tracks, the measuring sensors being movable from the front axle to the rear axle, being disposed in the area of the front and in the area of the rear axle or between the two positions A and B, and, when in use, recording the toe and camber angles as well as the x, y and z positions of the front- and rear-wheel centers at position A and at position B,
   - means for measuring the travel of the measuring sensors (4) and
   - a steering-wheel balance for detecting the position of the steering wheel, the readings obtained during use being processed mathematically with the steering angle of the vehicle's front axle.

3. Device according to claim 2, where the means (2) permitting lateral relaxation of the vehicle are movable plates (2), which are movable in the y direction.

4. Device according to claim 2, where roller beds are provided as means (2) for permitting lateral relaxation of the vehicle.

5. Device according to claim 2, where four measuring sensors (4) operating according to the principle of stereophotogrammetry are provided, each being assigned to one vehicle wheel and preferably being movable between the positions A and B.

6. Device according to claim 2, where rotary discs (3) are also provided in the area of the rear axle when the vehicle is at position B.

7. Device according to claim 2, where the distance between the positions A and B is between 0.3 and 1 m.

**Revendications**

1. Procédé pour déterminer et ajuster la géométrie du châssis d'un véhicule, comprenant les étapes suivantes consistant à :

   1 Monter une balance de direction pour détecter la position du volant et pour conduire le véhicule jusqu'à une position A, où, à ladite position A, les roues du véhicule sont disposées sur des moyens pour relâcher latéralement les roues,

   2 Enregistrer l'angle de pincement et l'angle de carrossage ainsi que les positions x, y et z du centre des roues avant en position A au moyen de capteurs de mesure (4) fonctionnant selon le principe de la stéréophotogrammétrie,

3 Enregistrer l'angle de pincement et l'angle de carrossage ainsi que les positions x, y et z du centre des roues arrière en position A au moyen de capteurs de mesure (4) fonctionnant selon le principe de la stéréophotogrammétrie,

4 Calculer tous les angles de pincement et les angles de carrossage du véhicule en position A par rapport à l'axe de symétrie du véhicule et par rapport à la position du volant, les valeurs de mesure de la balance de direction étant compensées avec l'angle de braquage de l'essieu avant,

5 Déplacer le véhicule à une position B, dans laquelle les roues du véhicule ne devant pas être ajustées sont placées sur des moyens pour relâcher latéralement les roues du véhicule et les roues du véhicule devant être ajustées sont placées sur des plaques tournantes (3),

6 Enregistrer l'angle de pincement et l'angle de carrossage ainsi que les positions x, y et z du centre des roues arrière en position B au moyen de capteurs de mesure (4) fonctionnant selon le principe de la stéréophotogrammétrie,

7 Enregistrer l'angle de pincement et l'angle de carrossage ainsi que les positions x, y et z du centre des roues avant en position B au moyen de capteurs de mesure (4) fonctionnant selon le principe de la stéréophotogrammétrie,

8 Calculer tous les angles de pincement et les angles de carrossage du véhicule en position B par rapport à l'axe de symétrie du véhicule et par rapport à la position du volant, les valeurs de mesure de la balance de direction étant compensées avec l'angle de braquage de l'essieu avant,

9 Calculer les angles de pincement et les angles de carrossage de toutes les roues avec des tours de roue compensés,

10 Ajuster chacun des angles de pincement de l'essieu avant dont les roues reposent sur les plaques tournantes (3) en mesurant en continu l'essieu avant au moyen des capteurs de mesure (4) fonctionnant selon le principe de la stéréophotogrammétrie en position B.

2. Dispositif pour mettre en oeuvre les étapes 1 à 9 du procédé selon la revendication 1, **comprenant**

- deux pistes de roulement (1) sur lesquelles le véhicule peut être déplacé d'une position A à une position B de façon autonome ou automatisée, chaque piste de roulement (1) étant munie de deux moyens (2) qui permettent un relâchement latéral des roues de véhicule et qui sont munis, au moins dans la zone de l'essieu avant du véhicule dans la position B, de plaques tournantes (3),

- un capteur de mesure (4) de chacun des deux côtés des pistes de roulement et fonctionnant suivant le principe de stéréophotogrammétrie, les capteurs de mesure pouvant être déplacés depuis l'essieu avant vers l'essieu arrière, étant disposés au niveau de l'essieu avant ainsi que de l'essieu arrière ou étant disposés entre les deux positions A et B, et les capteurs de mesure en cours d'utilisation à la position A enregistrant pour les roues avant et les roues arrière les angles de pincement et les angles de carrossage ainsi que les positions x, y et z des centres des roues, et en utilisation à la position B enregistrant les angles de pincement et les angles de carrossage ainsi que les positions x, y et z des centres des roues des roues avant et des roues arrière,

- des moyens pour détecter le parcours de déplacement des capteurs des mesure (4), et

- une balance de direction pour détecter la position du volant et dont les valeurs de mesure, en cours d'utilisation, sont compensées avec l'angle de braquage de l'essieu avant.

3. Dispositif selon la revendication 2, dans lequel les moyens (2) pour relâcher latéralement le véhicule sont des plaques mobiles (2) qui peuvent être déplacées dans la direction y.

4. Dispositif selon la revendication 2, dans lequel des lits à rouleaux sont prévus en tant que moyens (2) pour relâcher latéralement le véhicule.

5. Dispositif selon la revendication 2, dans lequel sont prévus quatre capteurs de mesure (4) fonctionnant selon le principe de la stéréophotogrammétrie, chacun étant affecté à une roue du véhicule et pouvant de préférence être déplacé entre les positions A et B.

6. Dispositif selon la revendication 2, dans lequel des plaques tournantes (3) sont également prévues en position B dans la zone de l'essieu arrière du véhicule.

7. Dispositif selon la revendication 2, dans lequel la distance entre les positions A et B est comprise entre 0,3 et 1 m.

Fig. 1a

Fig. 1b

Fig. 2

Fig. 3

Spur- und Sturzwinkel am drehenden Rad gemessen mit x-3Dprofile

Messnummer ~ Drehwinkel um die Radachse

—▲— Spurwinkel —■— Sturzwinkel

**EP 2 321 618 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007003086 A1
- DE 102006036671 A1
- WO 2008028832 A1
- US 20020040533 A1
- DE 29906813 U1
- US 6209209 B1
- US 6219134 B1